# EUROPEAN PATENT APPLICATION

(11) **EP 1 183 942 A1**
(43) Date of publication of application: **06.03.2002**
(21) Application number: 01203304.9
(22) Date of filing: 31.08.2001
(51) Int. Cl.: A01G 9/14

(54) **Installation for the cultivation of plants**

(30) Priority: 31.08.2000 NL 1016066
(71) Applicant: Kwekerij Mostert Nieuwerkerk B.V., 2913 LS Nieuwerkerk A/D Ijssel (NL)
(72) Inventor: Mostert, Frederik Hendrik, 2913 LS Nieuwerkerk a/d Ijssel (NL); Mostert, Gerben Roland Christiaan, 2913 LS Nieuwerkerk a/d Ijssel (NL)
(74) Representative: Jorritsma, Ruurd

(57) **Abstract**

The present invention relates to an installation (1) for the cultivation of plants. The installation (1) comprises a multiplicity of parallel sets of rails (3), located alongside one another, terminating at at least one gangway (2) and supported some distance above the ground, for propagating trays (7), also termed roll containers, that can be moved over said sets of rails (3). According to the invention the rails (4) of the sets of rails (3) have projecting ends (5) which are self-supporting above said gangway (2). According to the invention the sets of rails (3) can extend between two of said gangways (2), the rails (4) then having projecting ends (5) above both gangways (2). A truck (8) that can be driven back and forth along the gangway (2) can be provided on the gangway (2), which truck (8) can be provided with lifting means for lifting a propagating tray (7) off projecting ends (5), lifting the lifted propagated tray (7) over propagating trays (7) located on projecting ends (5) and setting a lifted propagating tray (7) down on projecting ends (5).

## Description

The present invention relates to an installation for the cultivation of plants, comprising a multiplicity of parallel sets of rails, located alongside one another, terminating at at least one gangway and supported some distance above the ground, for propagating trays, such as so-called roll containers, that can be moved over said sets of rails.

Installations of this type for the cultivation of plants are fairly generally known. With these installations use is made of propagating trays containing a quantity of cultivated plants, or plants to be cultivated, in each propagating tray. The propagating trays are arranged close beside one another in a cultivation area, in general a greenhouse, and together form a cultivation field. The reason for this is to make the best possible use of the floor area available for cultivation in said greenhouse. In order then to be able to reach a propagating tray and the plants contained therein, the propagating trays are placed on sets of rails which terminate at a gangway that is accessible to staff and/or handling devices. In this way it is possible to remove a row of propagating trays from a large field full of propagating trays to the gangway via the rails on which that row of propagating trays is positioned and then further to treat, to inspect or carry out any other operation on all propagating trays or, for example, further to treat, to inspect or to carry out any other operation on one propagating tray from the row. The gangway remains essentially free during cultivation.

The aim of the present invention is to increase the total surface area available for cultivation.

Said aim is achieved in that the rails of the sets of rails in an installation of the type indicated in the preamble have projecting ends which are self-supporting above the gangway. In this way it becomes possible also to use at least part of the gangway as a cultivation surface. After all, (part of) a cultivation tray can be on the projecting ends.

In order to make a field of propagating trays more readily accessible, it is preferable according to the invention if the sets of rails extend between two of said gangways and if the rails of said sets of rails have said projecting ends above both gangways. In the case of the conventional systems a second gangway leads to a substantial loss in cultivation surface area, whilst this is not the case or at least is the case to a much lesser extent according to the present invention.

In order to be able to fill a field of propagating trays as full as possible, it is preferable according to the invention if the sets of rails are essentially straight. In this way it becomes possible to position the propagating trays more or less with the tray walls in contact with one another all round.

In order, on the one hand, to lose as little cultivation surface area as possible and, on the other hand, nevertheless still to be able to move propagating trays along the gangways, it is advantageous in the case of an installation according to the invention, which contains propagating trays, positioned on the sets of rails, which have a length A, viewed transversely to the longitudinal direction of the sets of rails, and a width B, viewed in the longitudinal direction of the sets of rails, if the projecting ends of the sets of rails, viewed in the longitudinal direction of the sets of rails, have a length L that is greater than or equal to the width B of the propagating trays. In this way it becomes possible to position an entire propagating tray above the gangway for the purposes of cultivation. In particular, the length L with this arrangement will be 10 to 40 cm, preferably approximately 20 cm, greater than the width B. If the length L is much greater there is then a risk that the projecting ends are insufficiently self-supporting or have to be made of very heavyweight construction in order to remain self-supporting. A length L of up to approximately 40 cm greater than the width B is extremely practical in practice in order to be able to position the last propagating tray in a row, which last propagating tray is located above the gangway, somewhat apart from the other propagating trays in said row, so that when handling said propagating tray plants in the other propagating trays do not have to be touched or at least barely have to be touched.

For handling the propagating trays it is preferable in the case of an installation according to the invention if the, preferably each, at least one gangway is provided with a truck that can be driven back and forth along said gangway. Such a truck can be, for example, a travelling truck, mounted above the gangway, by means of which the propagating trays can be manipulated from above. However, it is particularly preferred according to the invention if the truck is supported on the gangway by wheels, preferably in or on truck rails running in the longitudinal direction of the gangway, and if the truck has an overlapped truck section facing the sets of rails and located below the projecting ends. In this way it becomes possible to drive the truck essentially underneath the projecting ends, which is appreciably less expensive from the structural standpoint than is a travelling truck to be suspended in the top of a greenhouse with an associated set of rails. A travelling truck suspended in the top of a greenhouse with an associated set of rails furthermore has the disadvantage that this will take away some light, which is undesirable from the standpoint of cultivation of the plants.

In order to be able to move the propagating trays on sets of rails along said sets of rails from the gangway, it is advantageous according to the invention if a drawbar extends along that section of each set of rails that is located outside the at least one gangway, if the drawbar is provided with transport pawls for engaging on propagating trays and if the overlapped truck section is provided with pulling means that can be coupled to the drawbar for moving the drawbar back and forth. In order to provide the greatest possible freedom in the logistics or, if one prefers, the freedom of handling, of a field of propagating trays, it is advantageous according to the invention if pawl release means extend along the drawbar for bringing the pawls outside the range of the propagating trays and if said overlapped truck section is provided with pawl manipulation means that can be coupled to the pawl release means for operating the pawl release means. The drawbar can extend from gangway to gangway.

In order to be able to manipulate the propagating tray it is advantageous according to the invention if the truck is provided with lifting means for lifting a propagating tray from said projecting ends, lifting said propagating tray that has been lifted up over projecting ends supporting propagating trays and setting down a propagating tray that has been lifted up on one of said projecting ends. In this way it becomes possible to lift a propagating tray from the projecting ends of one set of rails and to set the propagating tray down again on the projecting ends of another set of rails, for example an adjacent set of rails. It also becomes possible in this way to lift a propagating tray from projecting ends and to move it along part of the gangway or the entire gangway, whilst all or some of the other projecting ends are occupied by other propagating trays. According to an advantageous embodiment, the lifting means comprise one or more lifting posts provided on the truck, which lifting posts are located outside the overlapped section of the truck and each comprise one or more lifting arms facing the sets of rails, which lifting arms can be moved up and down over the lifting post.

The present invention will be explained below with reference to an illustrative embodiment shown diagrammatically in the drawing. In the drawing:
Fig. 1 shows a diagrammatic plan view of an installation according to the invention;
Fig. 2 shows a diagrammatic longitudinal sectional view, partially an ordinary view, of an end section of a set of rails from Fig. 1;
Fig. 3 shows a view corresponding to Fig. 2, but now also showing a truck that can be driven over the gangway;
Fig. 4 shows a diagrammatic plan view of a truck located below projecting ends;
Fig. 5 shows a diagrammatic perspective side view as a detail of pawl release means;
Fig. 6 shows a diagrammatic side view, partially in section, as a detail of a preferred variant of the pawl release means;
Fig. 7 shows, diagrammatically, a plan view of two sets of rails from Fig. 1, in which a highly advantageous logistics process is illustrated;
Fig. 8 shows a view corresponding to Fig 6, but now showing a different logistics process in a simplified manner.

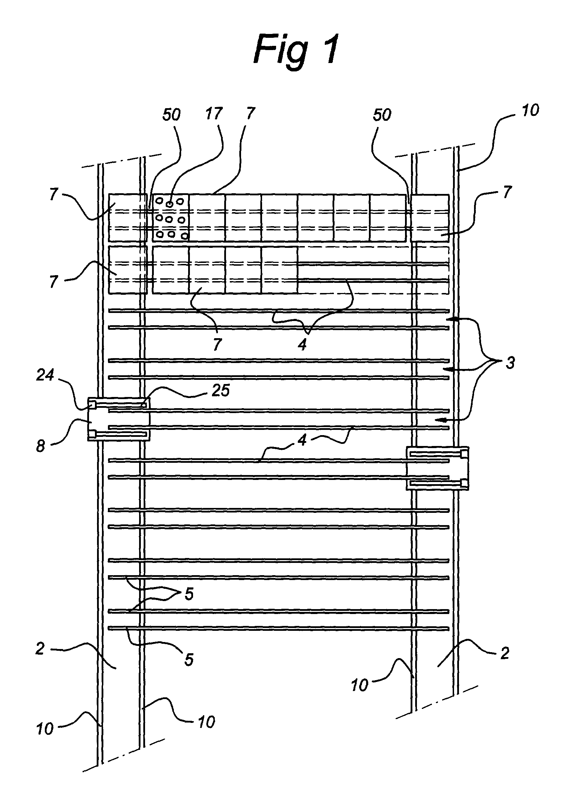

Fig. 1 shows a plan view of an installation 1 according to the invention. The installation 1 comprises a multiplicity (nine are shown in Fig. 1) of parallel sets of rails 3 located alongside one another. Each set of rails 3 has two rails 4 which at opposite ends terminate at, in particular above, a gangway 2. Propagating trays 7, also referred to as roll containers, are placed on the sets of rails 3 with the rails 4. In Fig. 1 only the upper set of rails 3 is shown completely filled with propagating trays. The set of rails below this is shown with a few propagating trays. For the sake of clarity, no propagating trays 7 are shown for the other sets of rails. As is indicated diagrammatically in one of the propagating trays, these trays are intended for a multiplicity of plants 17.

The rails 4 have projecting ends 5 at opposite ends, which projecting ends 5 are self-supporting, each above a respective gangway 2. As can be seen in Fig. 1, the projecting ends 5 have a length such that a propagating tray 7 fits on said self-supporting projecting ends 5. As will be clear, self-supporting is understood to mean protruding unsupported above (the gangway).

Each gangway 2 is provided with two truck rails 10 over which a truck 8 can be driven back and forth.

As can be seen from Fig. 1, and can also be seen from the other figures, the projecting ends 5 make it possible for the gangway, or at least part thereof, also to be used for cultivation during cultivation. The size of the so-called field of propagating trays can be increased in this way.

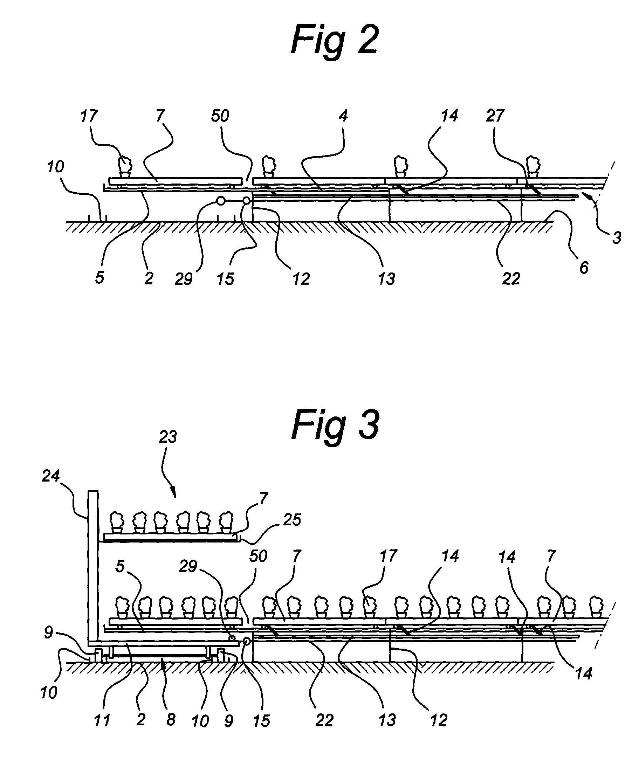

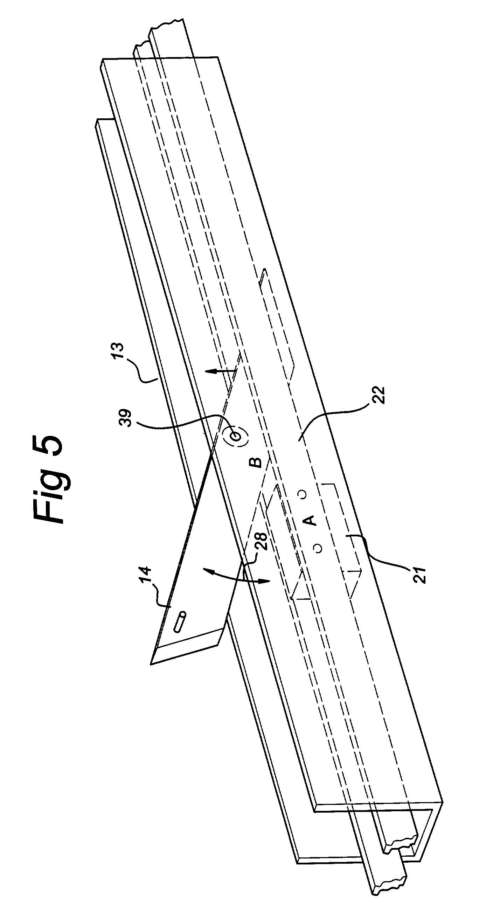

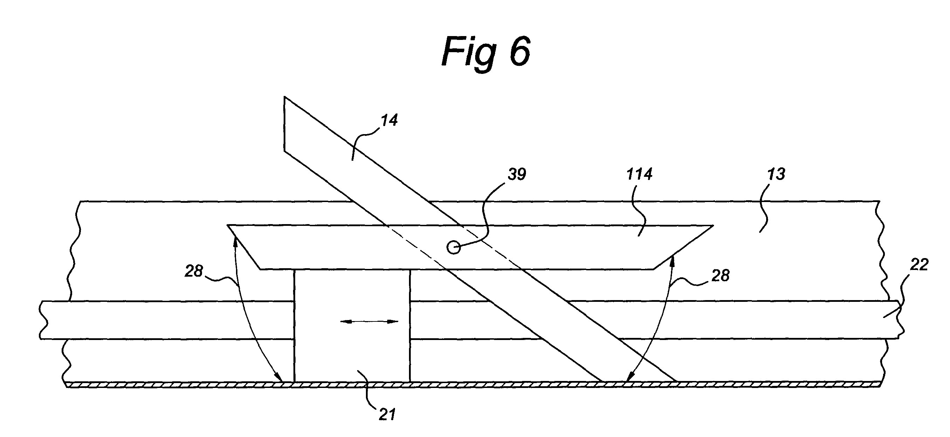

With reference to Fig. 2 it can be seen that the sets of rails 3 with rails 4 run some distance above the ground 6 and are supported outside the gangways 2 by uprights 12. Furthermore, for the purposes of illustration, a plant 17 is shown in each propagating tray 7 in Fig. 2. However, it should be clear that the propagating trays 7 will each contain several plants 17. It can furthermore be seen in Fig. 2 that a drawbar 13, with pawls 14, extends along the bottom of the set of rails 3. The pawls 14 can engage on ridges 27 that are provided on the bottom of the propagating trays 7. The drawbar 13 can be moved back and forth in its longitudinal direction by alternately pulling and pushing on the eye 15. When the drawbar 13 is pulled to the left in Fig. 2, the pawls 14 will then engage on the ridges 27 and thus move the propagating tray 7 to the left. In order to prevent the drawbar 13 having to be pulled over a very long distance, the pawls 14 are so constructed that when the drawbar 13 is pushed back towards the right they are able to swing clear, overcoming a spring action, in order thus to be able to pass by the ridges 27 and when a subsequent pull stroke is made are able to engage on said ridges 27 from the other side of the ridges 27 in order to carry along a propagating tray. In order to be able to stop the pawls 14 working, or at least to be able to manipulate or operate these, a strip 22 that can be moved back and forth in the longitudinal direction via an eye 29 at the end is provided along the drawbar 13. The drawbar 13 and strip 22 will be discussed in more detail when discussing Figs 5 and 6.

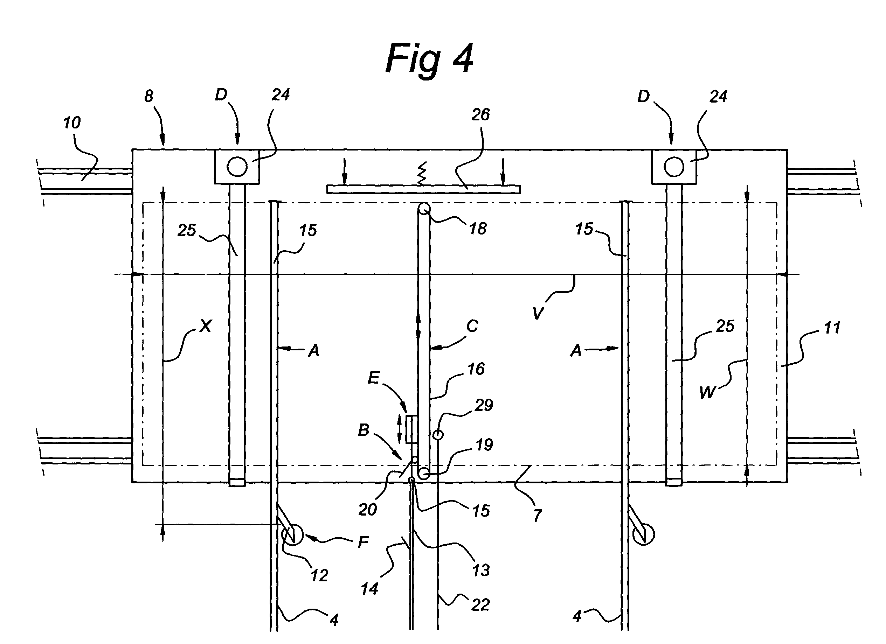

Fig. 3 is a view corresponding to that in Fig. 2, but now also showing a truck 8 that can be driven back and forth over the gangway 2 in a direction transverse to the longitudinal direction of the set of rails 3. The truck 8, that incidentally is also shown in Fig. 1, is provided with wheels 9 which run in gutter-like truck rails 10. The truck 8 has a section 11 overlapped by the projecting ends 5. This overlapped section 11 is thus below the so-called projecting ends 5 and thus makes it possible for the truck having this overlapped section 11 to drive on below the projecting ends 5. With reference to Fig. 4 as well as to Fig. 3, the truck 8 is provided, outside the overlapped truck section 11, with lifting posts 24 with, mounted on these, lifting arms 25 which can be moved up and down in a vertical direction over the lifting posts 24 and thus form lifting means 23 by means of which a propagating tray 7 can be lifted off the projecting ends 5 and in particular can be lifted to some height above said projecting ends 5 such that the lifted propagating tray 7 is able to pass over underlying projecting ends 5 with a filled propagating tray 7 thereon. This is illustrated in particular in Fig. 3.

Further referring to Fig. 4, it can be seen in this figure that the truck 8 is provided with two lifting arms 25 with a spacing between them that is greater than the spacing between the rails 4 of the set of rails 3. However, in principle it is also possible that the spacing between the lifting arms 25 is less than the spacing between the rails 4 of the set of rails 3, so that the lifting arms are located between the rails 4. However, this increases the risk that when a propagating tray is lifted up the propagating tray will fall off the lifting arms if the propagating tray 7 is unevenly loaded. Furthermore, it is pointed out that it is also readily conceivable that a third lifting post with lifting arms is provided or that even more lifting posts with lifting arms are provided.

As can also be seen in Fig. 4, the truck 8 is provided on the so-called overlapped section 11 with drive means 16 for the drawbar 13. The drive means 16 comprise a continuous chain or belt 16 running over a drive pulley 18 and a return pulley 19. This chain/belt 16 has a coupling arm 20 for engaging in the coupling eye 15 at the end of the drawbar 13. By effecting coupling of the coupling arm 20 with the coupling eye 15 and then driving the drive wheel 18 alternately in opposite directions the chain/belt 16 is moved back and forth over a specific stroke length, as is shown by the arrows. The drawbar 13 is thus also moved back and forth with this stroke length. As explained above, the consequence of this will be that the pawls 14 are able to carry along propagating trays 7 located on the set of rails 3 in order finally to drive the propagating tray 7 closest to the gangway onto the projecting ends 15.

In order to be able to move a propagating tray 7 located on the projecting ends 15 from the projecting ends 15 and to be able to slide it onto the rails 4 supported by uprights 12, a so-called pusher bar 26 is provided on the truck 8, which pusher bar 26 can be driven, for example, by a hydraulic cylinder/piston unit or by some other means of pushing drive.

As is further illustrated in Fig. 4, the length X over which the projecting ends 15 protrude in a self-supporting manner is greater than the width W of the propagating trays 7 viewed in the longitudinal direction of the set of rails 3. The difference between the length X of the projecting ends 15 and the width W of the propagating trays is approximately 20 cm. The purpose of this difference in length is to be able to ensure that the propagating tray to be placed above the gangway 2 can be completely separated from the other propagating trays on the set of rails 3. This complete separation is illustrated in Figs 1-3 by means of the gaps 50.

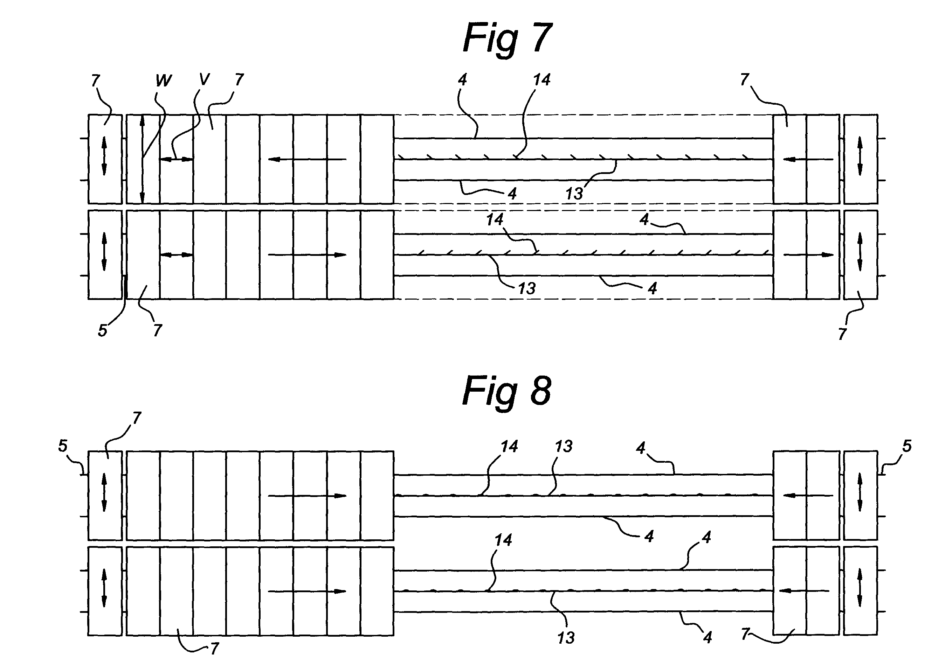

Fig. 5 shows, as a detail, a section of a drawbar 13, that is of U-shaped cross-section, with a pawl 14, which, as is indicated by the double-headed arrow 28, can pivot back and forth over some distance about pivot point 39. By in a suitable manner positioning the pivot point 39 eccentrically with respect to the weight distribution of the pawl 14 (outside the centre of gravity), the pawl 14 will tend to assume the position shown in Fig. 5 under the influence of gravity. However, it is also possible, optionally as a supplement to the eccentric positioning, to make use for this purpose of spring means, which are not shown but are certainly known to a person skilled in the art, which spring means ensure that the pawl 14 is able to return to its position shown in Fig. 5. When the drawbar 13 now moves to the right in accordance with Fig. 5 and the pawl 14 comes into contact with a ridge 27 (see Figs 1-2), the pawl 14 will then pivot anticlockwise in order, as it were, to make it lie flat and to be able to pass by the ridge 27. After the ridge 27 has been passed by, gravity and/or the spring means will ensure that the pawl 14 returns to its position shown in Fig. 5. However, it is also possible by means of the pawl manipulation means 21, 22 shown in Fig. 5 to bring the pawl 14 under control into a position in which it will remain beyond the reach of the ridges 27. Such a position is also referred to as a laid-flat position, although this does not necessarily have to be a completely horizontal or flat position. The pawl manipulation means can be constructed very simply with the aid of a block 21 fixed between two strips 22. The blocks 21 are moved by now moving the strips 22 back and forth in their longitudinal direction. When the strip 22 is now moved to the right in accordance with Fig. 5 the block 21 will cause the pawl 14 to pivot anticlockwise and, as it were, to make it lie flat. If the strips 22 continue to be left in the position now achieved, the pawls 14 will then all be able to remain in the flat position. In this way it is possible, for example, to push a propagating tray 7, viewed according to Fig. 5, from left to right over a set of rails with the aid of the pushing means 26 shown in Fig. 4, without being hindered in this movement by the pawls 14. Use is made of this, for example, in the logistics operation as shown diagrammatically in Fig. 8. Propagating trays 7 can then be pushed simultaneously towards one another from the gangways 2 on either side of the sets of rails 3 in order to fill the sets of rails 3 with propagating trays.

Fig. 6 shows, as a detail, a partially cross-sectional view of a variant of the drawbar with pawls in combination with pawl manipulation means. With this variant it is possible to make the drawbar 13 effective in two opposing directions. The same reference numerals as in Fig. 5 have been used for corresponding components. 13 indicates the drawbar 13 that is of U-shaped cross-section, 14 indicates a first pawl 14 that is effective in the direction towards the left and can be pivoted about the pivot point 39, 22 once again indicates the operating strip and 21 the block that is able to bring the pawl 14 into a so-called flat, or at least inoperative, position. As can be seen in Fig. 6, a second pawl 114 is provided on the pivot pin 39, which second pawl 114 essentially forms a mirror image of the pawl 14. In Fig. 6 the pawl 114 is in its inoperative, so-called laid-flat position. Like the pawl 14, the pawl 114 can be pivoted through the angular region indicated in more detail by double-headed arrow 28. By sliding the block 21 to the right by means of the strip 22, the pawl 114 will assume a sloping position as soon as the block 21 has passed beyond the pivot point 39. During this operation the left-hand end of the pawl 114 will drop to the base of U-shaped drawbar 13. In the interim the block 21 will push against the bottom section of the pawl 14 and pawl 14 will thus pivot anticlockwise into an inoperative position. It should be clear that it is in no way necessary to provide the second pawl 114 on the same pivot pin as the first pawl 14. The second pawl 114 can also be provided on its own pivot pin, in which case additional blocks 21 will, however, then have to be provided. It should also be clear that each drawbar will contain a multiplicity of pawls 14 and a multiplicity of pawls 114. With the embodiment of drawbar 13 shown diagrammatically in Fig. 6, with pawls 14, 114 and pawl manipulation means 22 and 21, it is possible, with reference to Fig. 1, to remove the propagating trays 7 from one row either to the left-hand or to the right-hand gangway. As far as handling, or back and forth movement of the strip 22 in the longitudinal direction, is concerned, it is pointed out that both in the case of the embodiment according to Fig. 6 and of that according to Fig. 5 use can be made of means corresponding to those which have been described with reference to Fig. 4 for moving the drawbar back and forth. However, it is very readily conceivable to make use of a cylinder/piston unit instead of an endless belt or chain for moving the strip 22 back and forth. It is also very readily conceivable to make use of a cylinder/piston unit instead of an endless chain or belt for movement of the drawbar 13 back and forth.

Fig. 7 shows, diagrammatically, a further logistics operation that is possible in particular by the use of the installation according to the invention. With regard to Fig. 6 it is pointed out that both sets of rails 3 shown are completely filled with propagating trays 7. If, for example, a propagating tray from the middle of the upper set of rails 3 is now required, the row of propagating trays on the upper set of rails 3 can be pushed through to the left by means of the drawbar 13 and pawls 14 and the propagating tray that has arrived above the gangway 2 can in each case be lifted up by means of the lifting means on a truck and transferred to the projecting ends at the left-hand side of the lower set of rails 3. This propagating tray 7 can then be pushed from left to right onto the lower set of rails 3, the propagating tray 7 furthest to the right on the right-hand side of the lower set of rails 3 then being transferred to the projecting ends 5. This latter propagating tray 7 can then be transferred, by means of the lifting means provided on a truck, to the projecting ends at the right-hand side of the upper set of rails 3. As will be clear, all propagating trays can thus be circulated anticlockwise. This can then be continued until the required propagating tray on a specific set of rails has arrived at the one or the other side on the projecting ends 5 of that set of rails. It is thus made possible very selectively to extract a specific propagating tray from the entire field of propagating trays, for example because the plant and the propagating tray have grown sufficiently to be ready for sale, have to be pricked out, have to be treated or for some other reason. As should be clear, with the installation according to the invention it becomes possible to implement a fully automated monitoring system for monitoring each propagating tray individually over time. Such a monitoring system is relatively simple to achieve with a computer and software that is obvious per se. Thus, a so-called field of propagating trays can be regarded as a matrix with many positions, each of which can contain a propagating tray. It is then necessary merely to record in a computer which propagating tray is in which position. Using simple software it is then possible, if a specific propagating tray has to be extracted from the field, to control the truck(s) fully automatically to manipulate the relevant propagating tray(s), row or rows of propagating trays.

## Claims

1. Installation (1) for the cultivation of plants, comprising a multiplicity of parallel sets of rails (3), located alongside one another, terminating at at least one gangway (2) and supported some distance above the ground, for propagating trays (7) that can be moved over said sets of rails, **characterised in that** the rails (4) of the sets of rails (3) have projecting ends (5) which are self-supporting above said gangway (2).

2. Installation according to Claim 1, **characterised in that** the sets of rails (3) extend between two of said gangways (2) and **in that** the rails (4) of the sets of rails (3) have said projecting ends (5) above both gangways (2).

3. Installation according to one of the preceding claims, **characterised in that** the sets of rails (3) are essentially straight.

4. Installation according to one of the preceding claims, comprising propagating trays (7), positioned on the sets of rails (3), which have a length A, viewed transversely to the longitudinal direction of the sets of rails (3), and a width B, viewed in the longitudinal direction of the sets of rails (3), **characterised in that** the projecting ends (5) of the sets of rails (3), viewed in the longitudinal direction of the sets of rails (3), have a length L that is greater than or equal to the width B of the propagating trays (7).

5. Installation according to Claim 4, **characterised in that** the length L is 10 to 40 cm, preferably approximately 20 cm, greater than the width B.

6. Installation according to one of the preceding claims, **characterised in that** the, preferably each, at least one gangway (2) is provided with a truck (8) that can be driven back and forth along said gangway (2).

7. Installation according to Claim 6, **characterised in that** the truck (8) is supported on the gangway (2) by wheels (9), preferably in or on truck rails (10) running in the longitudinal direction of the gangway, and **in that** the truck (8) has an overlapped truck section (11) facing the sets of rails and located below the projecting ends (5).

8. Installation according to Claim 7, **characterised in that** a drawbar (13) extends along that section of each set of rails (3) that is located outside the at least one gangway (2), **in that** the drawbar (13) is provided with transport pawls (14) for engaging on the propagating trays (7) and **in that** the overlapped truck section (11) is provided with pulling means (16, 18, 19, 20) that can be coupled to the drawbar (13) for moving the drawbar (13) back and forth.

9. Installation according to Claim 8, **characterised in that** pawl release means (21, 22) extend along the drawbar (13) for bringing the pawls (14) outside the range of the propagating trays (7) and **in that** said overlapped truck section (11) is provided with pawl manipulation means that can be coupled to the pawl release means for operating the pawl release means (21, 22).

10. Installation according to one of Claims 6-9, **characterised in that** the truck (8) is provided with lifting means (23) for lifting a propagating tray (7) from said projecting ends (5), lifting said propagating tray (7) that has been lifted up over projecting ends (5) supporting propagating trays (7) and setting down a propagating tray (7) that has been lifted up on one of said projecting ends (5).

11. Installation according to Claim 10, **characterised in that** the truck (8) is provided with one or more lifting posts (24), which are located outside the overlapped section (11) of the truck (8), and **in that** each lifting post (24) has one or more lifting arms (25) facing the sets of rails, which lifting arms (25) can be moved up and down over the lifting post (24).
